# FASCICULE DE BREVET EUROPEEN

(11) **EP 2 373 484 B1**
(45) Date de publication et mention de la délivrance du brevet: **20.11.2013**
(21) Numéro de dépôt: 09796680.8
(22) Date de dépôt: 14.12.2009
(51) Int. Cl.: B32B 3/24, B64D 45/02

(54) **PIÈCE EN MATÉRIAU COMPOSITE INCLUANT DES MOYENS DE PROTECTION CONTRE LA FOUDRE**
AUS VERBUNDSTOFF HERGESTELLTES TEIL MIT BLITZSCHUTZMITTEL
PART MADE OF A COMPOSITE, INCLUDING LIGHTNING PROTECTION MEANS

(30) Priorité: 15.12.2008 FR 0858577
(43) Date de publication de la demande: 12.10.2011
(73) Titulaire: European Aeronautic Defence And Space Company Eads France, 75016 Paris (FR)
(72) Inventeur: CAVALIERE, Frédérick, F-78180 Montigny Le Bretonneux (FR); ALIAGA, Daniel, F-93300 Aubervilliers (FR)
(74) Mandataire: Fourcade, Emmanuelle
(86) Numéro de dépôt international: PCT/EP2009/067080
(87) Numéro de publication internationale: WO 2010/069921

(56) Documents cités:
- EP-A- 0 900 647
- WO-A-90/01857
- WO-A-2006/093553
- US-A- 3 989 984
- US-A- 5 127 601
- US-A- 5 225 265
- US-A1- 2006 143 920

## Description

La présente invention entre dans le domaine des pièces en matériau composite, et plus particulièrement de telles pièces incluant des moyens de protection contre les effets de la foudre.

L'invention concerne plus particulièrement les pièces réalisées en matériau composite formé à base de résine du type thermodurcissable.

L'utilisation des matériaux composites est de nos jours largement répandue dans de nombreux domaines industriels, comme par exemple la construction automobile, la construction aéronautique ou encore la construction de bâtiments, du fait notamment du gain de masse que ces matériaux permettent d'obtenir par rapport à des matériaux conventionnels, à propriétés mécaniques équivalentes.

Les matériaux composites auxquels s'adresse la présente invention sont constitués de fibres noyées dans une résine polymère. Ces fibres sont en général longues, et elles peuvent être tissées ou non, minérales ou organiques, telles par exemple que des fibres de verre ou de carbone. Elles sont maintenues par une matrice en résine polymère organique, qui peut être du type thermoplastique ou thermodurcissable. Pour ce dernier type de résine, auquel s'applique plus spécifiquement l'invention, la réticulation est initiée par la chaleur, et elle est irréversible.

La fabrication de pièces en matériau composite formé à base de résine thermodurcissable s'effectue de manière classique par la mise en oeuvre d'un moule. Des couches de fibres imprégnées de résine non durcie sont déposées et empilées en plis dans un moule ouvert dont la surface de moulage présente la forme de la pièce à réaliser, de manière à former un stratifié composite. Ces couches sont recouvertes d'éventuels produits d'environnement, généralement constitués d'un tissu de pompage de l'excédent de résine et d'un tissu de drainage pouvant être séparés par des films plastiques, puis par une vessie souple déterminant entre elle et le moule un volume qui permet la mise sous pression des plis, sous l'effet de la pression atmosphérique, par une mise au vide partiel dudit volume, de sorte à assurer le compactage des différents plis entre eux. Lors de la mise sous pression, le tissu de drainage disposé entre la pièce et la vessie assure le drainage de l'air et des vapeurs de solvants émanant de la résine hors du stratifié composite. L'ensemble est ensuite soumis à cuisson, par exemple en autoclave, en maintenant la mise au vide partiel de manière à réaliser la polymérisation de la résine et la cohésion des plis, conférant à la pièce sa rigidité et ses caractéristiques mécaniques avantageuses. Les vapeurs de solvants dégazant pendant cette cuisson continuent d'être drainés au travers du tissu de drainage. La pièce est enfin démoulée. Selon les techniques utilisées, pour l'obtention des pièces minces comportant au moins une courbure, le moule peut être mâle, c'est-à-dire à surface de moulage de la pièce principalement convexe, ou femelle, à surface de moulage de la pièce principalement concave.

Le domaine d'application préféré de l'invention, bien que non limitatif, est la fabrication de pièces de structure d'aéronefs, notamment de panneaux ou de tronçons de fuselage. De telles pièces sont en général minces et elles présentent une courbure. Elles sont particulièrement exposées, lors de leur utilisation, en particulier en vol, aux impacts de foudre. On comprend aisément qu'il est essentiel qu'elles soient protégées contre les effets néfastes de ces impacts. Un problème lié à l'utilisation des matériaux composites est que ces derniers présentent intrinsèquement un mauvais comportement en réponse aux impacts de foudre. Ils sont généralement électriquement isolants ou faiblement conducteurs, si bien qu'ils sont incapables d'évacuer le courant associé à la foudre. Ceci engendre un fort risque d'endommagement de la structure au droit de l'impact.

Pour remédier à cet inconvénient majeur, il est courant d'inclure dans les pièces en matériaux composites formant les panneaux de fuselage, en général sur leur surface extérieure, une couche électriquement conductrice de protection contre la foudre, notamment sous la forme d'un grillage métallique. Une telle caractéristique a pour effet d'améliorer la conductivité de la pièce. Le courant de foudre est alors dispersé sur la surface de la pièce, le long des fils du grillage, et la tenue à la foudre de la pièce est améliorée. Une telle solution n'est cependant pas entièrement satisfaisante, car la conductivité électrique de la pièce ainsi constituée n'est pas homogène en raison de l'anisotropie du grillage. En outre, les pièces ainsi formées sont pénalisées par la masse nécessaire de grillages réalisés en bronze ou en alliage de cuivre qui atteint généralement entre 80 et 300 g/m², et dont les mailles sont remplies de résine, ce qui alourdit l'ensemble et va à l'encontre des exigences constantes d'optimisation de la masse des pièces constitutives des aéronefs.

La présente invention vise à remédier aux inconvénients des pièces en matériaux composites incluant une protection contre les effets de la foudre existantes, notamment à ceux exposés ci-avant, en proposant une pièce de ce type qui offre un fort degré de protection contre les effets de la foudre et qui puisse en outre être fabriquée, sous une forme incluant directement les moyens de protection contre la foudre, par les techniques de moulage employées de façon classique pour la fabrication de pièces composites à base de résine thermodurcissable, y compris pour celles mettant en oeuvre un moule dit mâle. L'invention vise également à ce que la pièce présente une masse la plus faible possible, pour répondre notamment aux exigences d'optimisation de la masse des éléments utilisés pour constituer les aéronefs.

Par mesure de commodité, on utilisera dans toute la présente description les termes protection contre la foudre pour désigner la protection contre les effets de la foudre, étant bien entendu qu'il ne s'agit pas ici d'éviter que la foudre touche la pièce, mais plutôt de faire en sorte que les effets de l'impact de la foudre sur cette dernière soient gérés au mieux de manière à assurer qu'ils ne soient pas délétères pour la pièce, et plus généralement sur l'appareil dans laquelle elle est incluse.

Selon l'invention, une pièce en matériau composite formé à base de résine thermodurcissable, incluant des moyens de protection contre la foudre, se caractérise en ce que les moyens de protection contre la foudre comportent, sur une surface supérieure de la pièce susceptible d'être exposée à des impacts de foudre, une couche continue d'une feuille métallique présentant des perforations selon un taux de perforation surfacique, exprimant la surface occupée par les perforations sur la feuille par rapport à la surface totale de la feuille, qui est compris entre 0,005 % et 20 %.

De façon tout à fait avantageuse, la surface de chacune des perforations est en outre inférieure ou égale à 20 mm².

Par couche continue d'une feuille métallique, on englobe ici aussi bien le cas où la couche est constituée d'une seule feuille, qui occupe toute la surface de la pièce susceptible d'être exposée aux impacts de foudre, que le cas où cette couche est constituée d'une pluralité de feuilles métalliques juxtaposées, de préférence sensiblement identiques les unes aux autres, qui constituent ensemble la totalité de la couche. Ces feuilles se recouvrent alors les unes les autres au niveau de leurs bords respectifs, de manière à assurer la continuité de la couche de métallisation sur toute la surface visée de la pièce. Ce dernier cas, mettant en oeuvre une pluralité de feuilles, s'avère le plus fréquent dans la pratique, en particulier dans le domaine des pièces de structure d'aéronef, du fait des dimensions importantes de ces pièces.

La surface extérieure de la pièce susceptible d'être exposée aux impacts de foudre correspond en général sensiblement à la surface extérieure totale de la pièce. Pour des raisons de commodité pratique dans la mise en oeuvre industrielle, il est particulièrement avantageux dans tous les cas de prévoir que la totalité de la surface supérieure de la pièce soit recouverte de la couche de métallisation.

Dans le cadre du domaine d'application préféré de l'invention dans lequel la pièce est un panneau ou un tronçon de fuselage d'aéronef, sur l'appareil fini, la surface supérieure de la pièce est celle qui se trouve exposée vers l'extérieur de l'appareil, et c'est sur elle qu'est susceptible de frapper la foudre. La couche de métallisation, formée des feuilles métalliques électriquement conductrices, est avantageusement disposée au niveau de cette surface supérieure, si bien que le courant de foudre est dispersé sur la surface de cette couche dès son entrée en contact avec la pièce.

L'utilisation de feuilles métalliques conformément à l'invention s'avère particulièrement avantageuse, d'une part car elle assure une évacuation efficace des courants issus de la foudre, et ce dans toutes les directions du plan de la couche continue de feuilles, sans anisotropie, et d'autre part car les feuilles présentent une masse réduite, notamment bien inférieure à celle d'un grillage, dont les mailles sont en outre généralement remplies de résine lors de la fabrication de la pièce par moulage. Cette masse réduite satisfait aux exigences en la matière pour les pièces d'aéronefs.

La pièce selon l'invention peut en outre avantageusement être fabriquée par un procédé de moulage classique en lui-même, indifféremment au moyen d'un moule mâle ou d'un moule femelle.

Dans de nombreux cas, pour la fabrication de pièces en matériau composite formé à base de résine thermodurcissable, notamment mais non exclusivement dans le domaine aéronautique, on préfère utiliser des moules dits mâles, c'est-à-dire présentant une surface de moulage principalement convexe. C'est le cas en particulier pour la fabrication de panneaux de fuselage d'avion. Dans le contexte de la fabrication de tels panneaux, la face supérieure de la pièce, qui est convexe, et qui sera ultérieurement exposée au risque d'impact de foudre, est alors formée à l'opposé de la surface de moulage également convexe du moule. La face inférieure concave de la pièce est quant à elle formée contre la surface de moulage, ce qui garantit une meilleure tolérance dimensionnelle. Ceci est particulièrement avantageux dans le cadre de panneaux de fuselage, qui sont assemblés par leur face inférieure sur un cadre support de l'aéronef, et pour lesquels il est donc important de disposer d'une bonne précision dimensionnelle au niveau de la face inférieure.

Selon un procédé de fabrication d'une pièce en matériau composite selon l'invention, qui met en oeuvre un moule à surface de moulage principalement convexe, des couches de fibres imprégnées de résine thermodurcissable, classiques en elles-mêmes, sont déposées sur un moule de manière à former un stratifié composite.

Une feuille métallique, ou une pluralité de feuilles métalliques juxtaposées, perforées conformément à l'invention, sont appliquées sur le stratifié de sorte à former une couche continue sur une face de ce dernier. Cette couche continue peut être constituée d'une seule et unique feuille. Dans le cas notamment de pièces de grandes dimensions, elle peut également être formée d'une pluralité de feuilles sensiblement identiques se superposant les unes aux autres au niveau de leurs bords respectifs, de manière à assurer la continuité de la protection contre la foudre sur toute la surface supérieure de la pièce. Chacune des feuilles métalliques est de préférence recouverte par une couche de résine thermodurcissable non polymérisée sur une face, et éventuellement sur ses deux faces opposées, de telle sorte que, pour sa face interne se disposant contre le stratifié composite, elle présente une meilleure adhérence au stratifié, et/ou, pour sa face externe opposée, se disposant vers l'extérieur de la pièce, elle est protégée par la couche de résine ainsi formée lors d'opérations de traitement de surface subséquentes, qui sont généralement effectuées avant le traitement de la pièce par peinture. L'imprégnation de résine sur une des deux faces de la feuille métallique, voire les deux faces, peut également constituer une protection pour un éventuel traitement de surface réalisé sur la feuille au moment de sa fabrication.

Sur la couche de feuilles métalliques sont déposés successivement, de façon classique en elle-même, des tissus de pompage de l'excédent de résine et de drainage de l'air et des vapeurs de solvant, puis une vessie souple étanchée sur ses bords avec le moule.

Une mise au vide partiel est ensuite réalisée entre la vessie et le moule. Ce dernier est soumis à des cycles de température et de pression de manière à réaliser la polymérisation et le durcissement de la résine.

Lors de ces dernières opérations, la couche de feuille métallique présente sur le stratifié assure le drainage de l'air et l'évacuation des vapeurs de solvants pouvant émaner de la résine hors du stratifié, malgré le fait que le métal constitutif de la feuille soit intrinsèquement étanche à l'air et aux vapeurs de solvant. Ce résultat est obtenu par les perforations de la feuille métallique, réalisées selon des paramètres avantageusement choisis selon l'invention de manière à obtenir le meilleur compromis entre d'une part l'efficacité de ce drainage d'air et de solvants lors de la fabrication de la pièce, et d'autre part l'efficacité de la protection contre la foudre de la pièce réalisée. Cette efficacité est assurée par une dispersion rapide du courant de foudre sur toute la surface de la couche de métallisation sur la pièce. La présence des perforations, selon le taux surfacique et dans la plage de valeurs de surface préconisés par l'invention, n'altère en particulier pas les propriétés avantageuses des feuilles métalliques en termes de bonne continuité de la matière dans le plan, bonne conductivité dans toutes les directions du plan et bonne évacuation des charges électriques, la feuille métallique ayant l'avantage de présenter des caractéristiques homogènes dans toutes les directions du plan de la feuille. Il convient de préciser ici que la couche continue de feuilles métalliques selon l'invention est destinée à recouvrir de grandes surfaces des pièces de structure de l'aéronef, l'efficacité de la protection contre la foudre étant obtenue par la dispersion du courant issu de la foudre dans toutes les directions, sur une grande surface de cette couche de métallisation.

De plus, dans une certaine mesure, les perforations permettent au cours de l'étape de cuisson le fluage de l'excédent de résine compris dans le stratifié composite et à l'interface du stratifié et de la couche métallique vers le tissu de pompage.

La feuille métallique selon l'invention peut tout aussi bien être utilisée dans le cadre d'un procédé de fabrication mettant en oeuvre un moule à surface de moulage femelle, c'est-à-dire dans lequel la face supérieure convexe de la pièce se forme contre la surface de moulage principalement concave du moule, alors que la face inférieure se forme à l'opposé. Dans ce cas, la couche de feuille métallique est déposée sur le moule avant les couches de stratifié composite. Les étapes suivantes sont ensuite réalisées de la même manière qu'exposé précédemment, pour obtenir une pièce selon l'invention.

Le taux de perforation de la feuille métallique, ou des feuilles métalliques formant la couche continue de métallisation, est avantageusement compris entre 0,005 % et 20 %, de préférence compris entre 0,005 % et 5 %, et préférentiellement compris entre 0,005 et 0,5 %, de manière à s'approcher au plus près du comportement d'une feuille continue en terme de dispersion des courants issus de la foudre.

Dans des modes de réalisation préférés de l'invention, le positionnement des perforations est réalisé selon un motif régulier, notamment un quadrillage, de sorte à assurer une conductivité du courant sensiblement équivalente dans toutes les directions du plan de la couche de métallisation, depuis le point d'impact de la foudre.

Toujours dans ce même objectif de maintenir un niveau équivalent de conductivité dans toutes les directions du plan, les perforations présentent de préférence chacune une forme circulaire, ce qui permet avantageusement d'éviter des accumulations de charges électriques par effets de pointes et de limiter l'effet des perforations sur la résistance mécanique de la feuille métallique pendant ses manipulations, avant qu'elle ne soit posée sur le stratifié.

Dans des modes de réalisation préférés de l'invention, les perforations sont réalisées selon un pas compris entre 0,5 et 5 cm.

Selon une caractéristique avantageuse de l'invention, en termes de masse et de coûts notamment, la feuille métallique est de préférence un cliquant d'aluminium, qui a été soumis à perforation lors de sa fabrication par des méthodes industrielles, par exemple et de manière non limitative par des picots placés sur un rouleau entraînant la feuille et la perforant en même temps.

Dans d'autres modes de réalisation préférés de l'invention, la feuille métallique est constituée à base de cuivre.

La feuille métallique selon l'invention présente de préférence une épaisseur comprise entre 5 et 50 µm, de préférence comprise entre 5 et 30 µm. Des épaisseurs aussi faibles sont avantageusement permises grâce au faible taux surfacique de perforation, ainsi qu'à la taille réduite de chacune des perforations, qui permettent que la feuille ainsi perforée présente une bonne solidité, facilitant sa manipulation pour les opérations de fabrication de la pièce selon l'invention.

On obtient de ce fait avantageusement, selon l'invention, un bon compromis entre une masse réduite de la couche de métallisation, une bonne solidité des feuilles entrant dans sa constitution, et une bonne efficacité de dispersion d'un courant de foudre à la surface de la pièce.

Dans des modes de réalisation de l'invention, la feuille métallique peut en outre présenter, sur une face ou sur ses deux faces opposées, sur au moins une partie de sa surface, une couche support, constituée de fibres minérales tissées ou agencées en feutre, par exemple un mat de verre formé d'un entrelacs de fibres de verre. Sur l'une et/ou l'autre de ses faces, cette couche support lui confère en particulier une meilleure solidité mécanique, et diminue les risques de déchirement de la feuille lors de sa manipulation, notamment lors de sa dépose sur le stratifié composite (ou sur le moule). Sur sa face externe, elle améliore en outre l'aspect cosmétique de la pièce. La ou les couches support constituées de fibres ne s'étendent pas sur la feuille métallique dans ses zones de recouvrement avec les feuilles contigües, ce qui permet avantageusement d'assurer une bonne continuité de la conductivité électrique d'une feuille à l'autre, par un contact direct des feuilles métalliques les unes avec les autres.

L'invention concerne également une feuille métallique pour la formation d'une couche de métallisation de protection contre la foudre pour la fabrication d'une pièce en matériau composite formé à base de résine thermodurcissable, qui répond aux caractéristiques énoncées ci avant.

En première étape de son utilisation pour la fabrication de la pièce par moulage, cette feuille est recouverte par une fine couche de résine thermodurcissable non polymérisée sur une face, éventuellement sur deux faces opposées.

L'invention sera maintenant plus précisément décrite dans le cadre de modes de réalisation préférés, qui n'en sont nullement limitatifs, représentés sur les figures 1 à 3, dans lesquelles :
- la figure 1 représente en vue de dessus une feuille métallique conforme à l'invention ;
- la figure 2 illustre de façon schématique, en vue en coupe selon un plan transversal, une étape du procédé de fabrication d'une pièce selon l'invention par moulage sur un moule mâle ;
- et la figure 3 montre en vue en perspective un panneau de fuselage d'avion formé en matériau composite conforme à l'invention.

L'invention concerne une pièce en matériau composite formé à base de résine thermodurcissable, telle que par exemple un panneau de fuselage d'avion, incluant des moyens de protection contre les effets de la foudre.

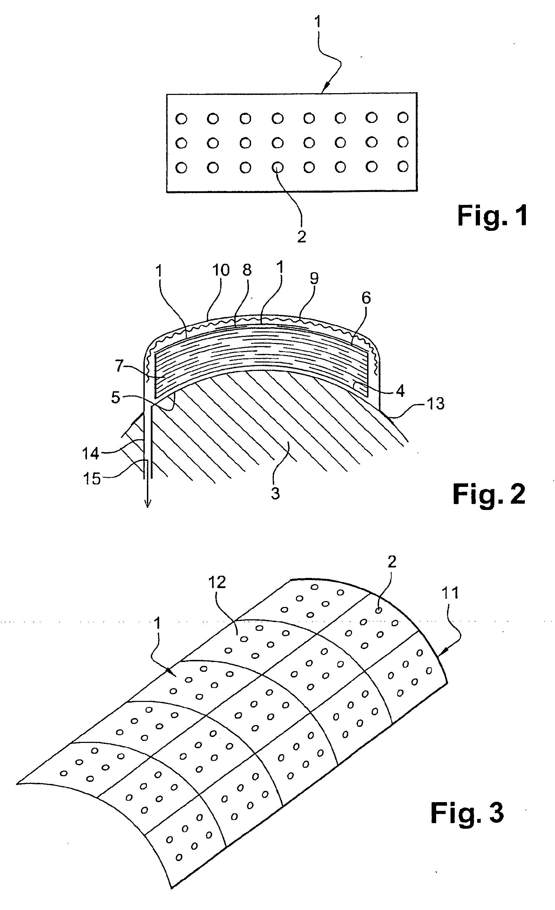

Ces moyens de protection contre la foudre mettent en oeuvre une ou plusieurs feuilles métalliques 1 présentant des perforations 2, comme illustré sur la figure 1. Sur cette figure, comme dans les suivantes, les perforations sont représentées à une échelle différente de la réalité, avec une taille plus grande, de manière à mieux être visualisées.

Dans le mode de réalisation préféré de l'invention dans lequel plusieurs feuilles sont utilisées, l'invention prévoit avantageusement que l'ensemble des feuilles soient constituées de manière sensiblement identique, et également perforées de manière similaire, en nombre, taille et motif des perforations 2, afin d'assurer une homogénéité tant de matière que de conductivité électrique pour l'ensemble des feuilles 1. L'invention n'exclut pas pour autant les configurations dans lesquelles les feuilles métalliques différeraient les unes des autres par une ou plusieurs caractéristiques.

La feuille 1 se caractérise par le matériau métallique qui la constitue, qui assure ses propriétés de conductivité électrique, ainsi que par sa fine épaisseur, de l'ordre de quelques dizaines de microns. Elle est de préférence constituée en un matériau de faible densité, de manière à ne pas augmenter significativement la masse de la pièce dans laquelle elle est incluse.

La feuille métallique 1 est de préférence développable. Il s'agit notamment, mais non limitativement, d'un cliquant d'aluminium, qui offre l'avantage d'une bonne solidité mécanique en même temps qu'une grande légèreté et une bonne conductivité électrique par unité de masse, ou d'une feuille à base de cuivre. Son épaisseur est par exemple comprise entre 10 et 50 µm, et sa masse surfacique entre 27 g/m² et 135 g/m² pour un alliage d'aluminium. Cette plage de valeurs n'est cependant nullement restrictive de l'invention, et elle peut être sensiblement différente en fonction des courants électriques que la pièce doit être en mesure d'évacuer, et également en fonction d'une résistance mécanique minimale requise pour assurer une mise en oeuvre de la feuille lors de la fabrication de la pièce.

La feuille 1 présente, dans l'exemple de réalisation préféré représenté sur la figure 1, une forme en plan sensiblement rectangulaire. Elle peut être préparée par exemple à partir d'une feuille de grande longueur conditionnée en rouleau.

Chaque feuille 1 peut être renforcée sur au moins une partie de sa surface par une couche support, qui n'est pas représentée sur les figures, qui est constituée de fibres minérales ou organiques telles que des fibres de verre ou d'une aramide, tissées ou agencées en feutre, par exemple sous forme d'un entrelacs de fibres, agencées de façon sensiblement parallèle à la feuille métallique 1. Une telle caractéristique est avantageuse car elle entraîne une augmentation de la résistance mécanique de la feuille 1, ce qui permet de renforcer cette feuille vis-à-vis des risques de déchirement lors de sa manipulation, par des opérateurs ou par des dispositifs automatiques, par exemple pour sa dépose lors du procédé de fabrication de la pièce dans laquelle elle est destinée à être incluse. La couche support est solidaire de la feuille métallique 1, par exemple grâce à des propriétés adhésives intrinsèques d'une résine déposée sur la feuille ou imprégnant le matériau de la couche support.

Chaque feuille est de préférence perforée selon un taux surfacique de perforation, c'est-à-dire le rapport de la surface totale des perforations à la surface de la feuille, qui est compris entre 0,005 % et 20 %, de préférence compris entre 0,005 % et 5 %. Un tel taux de perforation assure avantageusement une bonne perméabilité à l'air et aux vapeurs de solvants, ainsi qu'à l'excédent de résine, sans altérer de manière sensible la conductivité électrique et une bonne efficacité de dispersion du courant sur la surface de la feuille.

Les perforations 2 peuvent être réalisées par tout procédé industriel. Elles peuvent présenter toute forme, par exemple oblongue, elliptique, etc. Cependant, dans des modes de réalisation préférés de l'invention, elles sont avantageusement circulaires, assurant ainsi un même niveau de conductivité électrique dans toutes les directions du plan de la feuille, qui correspond avec le plan de la figure dans la représentation de la figure 1. L'ensemble des perforations 2 d'une même feuille 1 présentent de préférence, mais non limitativement, une forme similaire.

Le positionnement des perforations 2 est de préférence réalisé selon un motif régulier, par exemple un quadrillage comme représenté sur la figure. Afin d'obtenir à la fois la perméabilité régulière et homogène à l'air et au solvant et la conductivité électrique recherchées, le pas de ce quadrillage est de préférence compris entre 0,5 et 5 cm, pour une surface de chaque perforation comprise entre 0,1 et 20 mm².

A titre d'exemple, des perforations 2 de forme circulaire répondent aux valeurs données dans le tableau 1 ci-après.

**Tableau 1 - Caractéristiques de perforation de la feuille 1**

| Pas entre les perforations (cm) | Nombre de perforations par m² de feuille | Diamètre d'une perforation (mm) | Surface d'une perforation (mm²) | Taux de perforation de la feuille (%) |
|---|---|---|---|---|
| | | 0,5 | 0,196 | 0,1963 |
| 1 | 10 000 | 1 | 0,785 | 0,7854 |
| | | 2 | 3,142 | 3,1416 |
| | | 5 | 19,625 | 19,625 |
| | | 0,5 | 0,196 | 0,0079 |
| 5 | 400 | 1 | 0,785 | 0,0314 |
| | | 2 | 3,142 | 0,1257 |
| | | 5 | 19,625 | 0,785 |

Le matériau composite utilisé pour la fabrication de la pièce répond en lui-même à des caractéristiques classiques connues de l'homme du métier.

Il est constitué de fibres de préférence longues et continues par exemple de fibres de carbone, de verre, d'aramide, etc.

Les fibres sont enrobées d'une résine thermodurcissable, polymérisable à chaud, telle par exemple qu'une résine époxyde.

Selon un procédé de fabrication par moulage d'une pièce en matériau composite selon l'invention, on utilise un moule ouvert 3 classique en lui-même.

L'invention sera illustrée ci-après à titre d'exemple dans le contexte préféré de la fabrication d'un panneau de fuselage d'avion, présentant une courbure, et dans le cadre de l'utilisation d'un moule 3 dit mâle, c'est-à-dire dont la surface de moulage 4 est complémentaire d'une surface concave, dite inférieure, 5, de la pièce, par opposition à une surface convexe supérieure 6 qui est celle qui sera exposée à l'environnement extérieur de l'avion une fois la pièce montée sur celui-ci.

Un tel mode de mise en oeuvre n'est cependant pas restrictif de l'invention, qui s'applique également, par des modifications à la portée de l'homme du métier, au cas où le moule utilisé est un moule femelle, c'est-à-dire présentant une surface de moulage concave complémentaire de la surface convexe supérieure de la pièce.

De façon générale, pour la fabrication d'un panneau de fuselage d'avion, qui doit répondre à des contraintes dimensionnelles très précises pour permettre son montage sur un cadre support de l'avion, par sa face inférieure, on préfère utiliser un procédé de moulage mettant en oeuvre un moule dit mâle, qui permet de former la face inférieure concave de la pièce avec la meilleure précision.

Sur la surface de moulage 4 du moule sont déposées, de façon classique, des couches successives de fibres pré-imprégnées de résine, de manière à former un stratifié composite représenté de façon schématique sur la figure 2, et désigné globalement par la référence 7.

Le stratifié composite 7 est recouvert sur sa face supérieure 6 d'une couche de métallisation continue, formée d'une ou d'une pluralité de feuilles 1, de préférence constituées de façon similaire. Les feuilles 1 ainsi agencées seront disposées, une fois la pièce réalisée, sur une surface supérieure de celle-ci, susceptible lors de l'utilisation de l'avion d'être exposée aux impacts de foudre.

Les feuilles 1 sont disposées les unes par rapport aux autres de manière à assurer la continuité de matière et de conductivité électrique sur toute la surface de la couche de métallisation. Elles se superposent notamment les unes les autres au niveau de leur bords 8, sur une longueur d'environ 15 à 30 mm par exemple. Dans le cas où les feuilles 1 sont renforcées par une couche support constituée de fibres, sur une ou deux de ses faces, cette couche ne s'étend pas dans la zone de recouvrement des feuilles, de manière à assurer la continuité électrique par contact direct d'une feuille à une autre.

Sur cette figure, pour des raisons de clarté, les différents éléments appliqués les uns sur les autres dans le moule sont représentés légèrement écartés les uns des autres. Il est bien entendu que dans la pratique, l'ensemble de ces éléments sont plaqués les uns sur les autres.

De préférence, les dimensions des feuilles 1 sont choisies pour être inférieures aux dimensions de la pièce à métalliser, ce qui facilite la métallisation de pièces de grandes dimensions et/ou non-développables, et ce qui est compatible avec une pose automatique des feuilles. La largeur des feuilles est par exemple adaptée aux courbures de la pièce à fabriquer dans le sens de ladite largeur.

Préalablement à leur dépose sur le stratifié 7, chaque feuille 1 est de préférence recouverte d'une couche de résine thermodurcissable, de préférence de la même nature qu'une résine entrant dans la constitution du stratifié. Ceci est éventuellement réalisé sur ses deux faces opposées. Une telle caractéristique confère notamment avantageusement à la feuille 1 une meilleure capacité d'adhérence sur le stratifié 7 au niveau de la face située en regard de ce dernier.

On recouvre ensuite la couche de métallisation ainsi formée de différents tissus conjonctifs classiques en eux-mêmes. Parmi ces tissus conjonctifs, on a représenté sur la figure 2 en particulier un tissu de pompage et un tissu de drainage représentés plaqués l'un contre l'autre par un seul élément désigné dans son ensemble par la référence 9. Ces tissus permettent respectivement le pompage de l'excédent de résine dans le moule et l'évacuation de l'air et de vapeurs de solvants pouvant émaner de la résine, hors du stratifié 7.

L'ensemble est recouvert d'une vessie souple 10, classique en elle-même pour de tels procédés de moulage, fixée de manière étanche au moule 3 par son bord périphérique 13. Les étapes suivantes du procédé de fabrication de la pièce sont classiques. On crée une dépression à l'intérieur du moule, sous la vessie 10, par aspiration d'air à travers un tuyau 14 débouchant dans le moule, selon la direction indiquée par la référence 15. Ceci a pour effet de plaquer les nappes de fibres imprégnées contre la surface de moulage 4 sous l'effet de la pression atmosphérique et de les densifier. On réalise ensuite la réticulation de la résine à chaud, en appliquant différents cycles de température et de pression, par exemple en autoclave, dans des conditions adéquates pour obtenir une pièce de propriétés souhaitées, choisies selon des calculs à la portée de l'homme du métier.

Durant ces étapes, l'air et les vapeurs de solvant émanant de la résine s'échappent du stratifié 7 à travers les perforations 2 des feuilles 1 qui sont avantageusement réalisées selon un taux de perforation suffisamment élevé à cet effet, puis ils sont drainés vers l'extérieur à travers le tissu de drainage 9 par l'aspiration 15, évitant la formation dans le matériau de bulles sources d'une porosité qui altèrerait la qualité structurale de la pièce réalisée. L'excédent de résine entre le stratifié composite 7 et les feuilles 1 est absorbé par le tissu de pompage 9 en fluant à travers les perforations 2, ce qui permet avantageusement de minimiser l'épaisseur de la pièce finale compactée, ainsi que sa masse, en améliorant le taux de fibres dans la partie structurale.

Après durcissement de la résine et démoulage, on obtient la pièce 11 représentée sur la figure 3. Cette pièce présente une courbure. Sa surface supérieure 12 convexe est destinée à être exposée à l'extérieur de l'avion dans la structure duquel la pièce 11 sera montée, et donc potentiellement à des impacts de foudre. Sur cette surface supérieure 12 se trouve la couche continue de métallisation selon l'invention, formée des feuilles métalliques 1. Sur cette figure également, les perforations 2 ont été représentées, pour mieux les faire apparaître, plus grandes qu'elles ne sont réellement.

Les feuilles 1 peuvent être disposées selon tout agencement sur la pièce, en fonction notamment de la taille et de la forme de cette dernière. Dans le mode de réalisation représenté sur la figure 3, elles sont disposées de manière à former un quadrillage régulier sur la pièce. Elles peuvent tout aussi bien par exemple être disposées en bandes longitudinales sur la pièce, en bandes transversales ou même en biais.

Dans le mode de réalisation avantageux de l'invention dans lequel les feuilles 1 ont été recouvertes de résine avant utilisation, du moins sur leur face externe opposée au stratifié 7, ces feuilles sont protégées en surface par la couche de résine résultante lors d'opérations de traitement de surface qui seront ensuite réalisées sur la pièce.

Au cours de l'utilisation de la pièce 11, lorsque celle-ci est frappée par la foudre, le courant de foudre est efficacement et rapidement dispersé sur toute la surface supérieure 12 de la pièce 11, grâce aux bonnes propriétés de conductivité électrique de la couche de métallisation. La présence des perforations 2 dans le taux surfacique et dans la plage de surface choisis conformément à l'invention, n'est avantageusement pas pénalisante pour la performance de cette dispersion. Le courant est conduit dans toutes les directions depuis le point d'impact de la foudre. On évite alors les risques d'endommagement de la pièce du aux effets de l'impact de foudre.

En raison de la faible épaisseur de la feuille de métal utilisée et du choix préférentiel d'un métal réputé pour sa faible densité comme l'aluminium ou un alliage à base d'aluminium, la pièce 11 n'est pas significativement alourdie par la présence de la couche de métallisation, si bien qu'elle répond avantageusement favorablement aux exigences d'optimisation de la masse des pièces constitutives d'aéronefs.

La description ci-avant illustre clairement que par ses différentes caractéristiques et leurs avantages, la présente invention atteint les objectifs qu'elle s'était fixes. En particulier, elle fournit une pièce en matériau composite forme a base de résine thermodurcissable qui présente une protection efficace contre les effets de la foudre, en même temps qu'une masse limitée, et qui est apte a être fabrique par les procédés de moulage classiques, notamment au moyen d'un moule de surface de moulage principalement convexe.

## Revendications

1. Pièce (11) en matériau composite formé à base de résine thermodurcissable, incluant des moyens de protection contre la foudre, **caractérisée en ce que** lesdits moyens de protection contre la foudre comportent, sur une surface supérieure (12) de ladite pièce (11) susceptible d'être exposée à des impacts de foudre, une couche continue d'une feuille métallique (1) présentant des perforations (2) présentant chacune une surface inférieure ou égale à 20 mm², et selon un taux de perforation compris entre 0,005 % et 20 %.

2. Pièce selon la revendication 1, **caractérisé en ce que** le taux de perforation est compris entre 0,005 % et 5 %.

3. Pièce selon la revendication 1 ou 2, **caractérisée en ce que** le positionnement des perforations (2) est réalisé selon un motif régulier, notamment un quadrillage.

4. Pièce selon l'une quelconque des revendications 1 à 3, **caractérisée en ce que** ladite feuille métallique (1) est un cliquant d'aluminium.

5. Pièce selon l'une quelconque des revendications 1 à 4, **caractérisée en ce que** les perforations (2) sont réalisées selon un pas compris entre 0,5 et 5 cm.

6. Pièce selon l'une quelconque des revendications 1 à 5, **caractérisée en ce que** les perforations (2) présentent chacune une forme circulaire.

7. Pièce selon l'une quelconque des revendications 1 à 6, **caractérisée en ce que** la feuille métallique (1) présente une épaisseur comprise entre 5 et 50 µm.

8. Pièce selon l'une quelconque des revendications 1 à 7, **caractérisée en ce que** la feuille métallique (1) présente sur une face, ou sur deux faces opposées, au moins sur une partie de sa surface, une couche support, notamment constituée de fibres minérales tissées ou agencées en feutre.

9. Feuille métallique (1) pour la fabrication d'une pièce (11) en matériau composite formé à base de résine thermodurcissable selon l'une quelconque des revendications 1 à 8.

10. Feuille selon la revendication 9, **caractérisée en ce qu'**elle est recouverte par une fine couche de ladite résine thermodurcissable non polymérisée sur une face, ou sur deux faces opposées.

11. Procédé de fabrication d'une pièce (11) en matériau composite selon l'une quelconque des revendications 1 à 8, **caractérisé en ce que** :
- des couches de fibres imprégnées de résine thermodurcissable sont déposées sur un moule (3), de manière à former un stratifié composite (7),
- une feuille métallique (1) ou plusieurs feuilles métalliques juxtaposées, de préférence recouvertes par une couche de ladite résine thermodurcissable sur une face, de préférence deux faces, sont appliquées sur ledit stratifié (7) de sorte à former une couche continue sur une face dudit stratifié,
- des tissus de pompage et de drainage (9) et une vessie souple (10) sont déposés successivement sur ladite couche continue,
- une mise au vide partiel est réalisée entre la vessie (10) et le moule (3),
- et le moule (3) est soumis à des cycles de température et de pression de manière à réaliser la polymérisation de la résine et le compactage des couches de fibres.

12. Procédé selon la revendication 11, **caractérisé en ce que** le moule (3) présente une surface de moulage (4) principalement convexe.

## Patentansprüche

1. Teil (11) aus Verbundwerkstoff, der auf Basis von hitzehärtbarem Harz gebildet wird, einschließlich Schutzvorrichtungen gegen Blitzschlag, **dadurch gekennzeichnet, dass** die besagten Schutzvorrichtungen gegen Blitzschlag auf einer Oberseite (12) des besagten Teiles (11), die Blitzeinschlägen ausgesetzt werden könnte, eine durchgehende Schicht einer Metallfolie (1) aufweisen, die Perforationen (2) aufweist, die jeweils eine Fläche kleiner oder gleich 20 mm² aufweisen, und mit einem Perforationsgrad zwischen 0,005% und 20%.

2. Teil nach Anspruch 1, **dadurch gekennzeichnet, dass** der Perforationsgrad zwischen 0,005% und 5% liegt.

3. Teil nach Anspruch 1 oder 2, **dadurch gekennzeichnet, dass** die Positionierung der Perforationen (2) gemäß einem geordneten Motiv, vor allem in Form eines Rasters, ausgeführt ist.

4. Teil nach irgendeinem der Ansprüche 1 bis 3, **dadurch gekennzeichnet, dass** die besagte Metallfolie (1) ein Aluminiumflitter ist.

5. Teil nach irgendeinem der Ansprüche 1 bis 4, **dadurch gekennzeichnet, dass** die Perforationen (2) in einem Schritt zwischen 0,5 und 5cm erstellt werden.

6. Teil nach irgendeinem der Ansprüche 1 bis 5, **dadurch gekennzeichnet, dass** die Perforationen (2) jeweils eine kreisrunde Form aufweisen.

7. Teil nach irgendeinem der Ansprüche 1 bis 6, **dadurch gekennzeichnet, dass** die Metallfolie (1) eine Dicke zwischen 5 und 50µm aufweist.

8. Teil nach irgendeinem der Ansprüche 1 bis 7, **dadurch gekennzeichnet, dass** die Metallfolie (1) auf einer Seite oder auf zwei gegenüber liegenden Seiten zumindest auf einem Abschnitt ihrer Oberfläche eine Trägerschicht aufweist, die vor allem aus gewebten oder filzförmig angeordneten Mineralfasern gebildet wird.

9. Metallfolie (1) zur Herstellung eines Teiles (11) aus Verbundwerkstoff, der auf Basis von hitzehärtbarem Harz nach irgendeinem der Ansprüche 1 bis 8 gebildet wird.

10. Folie nach Anspruch 9, **dadurch gekennzeichnet, dass** sie auf einer Seite oder auf zwei gegenüber liegenden Seiten von einer feinen Schicht des besagten nicht polymerisierten hitzehärtbaren Harzes bedeckt ist.

11. Verfahren zur Herstellung eines Teiles (11) aus Verbundwerkstoff nach irgendeinem der Ansprüche 1 bis 8, **dadurch gekennzeichnet, dass**:
- Faserschichten, die mit dem hitzehärtbaren Harz imprägniert sind, auf einer Form (3) aufgebracht werden, um ein Verbund-Laminat (7) zu bilden,
- eine Metallfolie (1) oder mehrere nebeneinander gelegte Metallfolien, die auf einer Seite, und vorzugsweise auf zwei Seiten vorzugsweise mit einer Schicht des besagten hitzehärtbaren Harzes bedeckt sind, auf dem besagten Laminat (7) aufgetragen werden, um auf einer Seite des besagten Laminats eine durchgehende Schicht zu bilden,
- Pump- und Drainagegewebe (9) und eine elastische Blase (10) sukzessiv auf die besagte durchgehende Schicht aufgetragen werden,
- zwischen der Blase (10) und der Form (3) ein Teilvakuum erzeugt wird,
- und die Form (3) Temperatur- und Druckzyklen unterworfen wird, um die Polymerisation des Harzes und die Verdichtung der Faserschichten zu bewirken.

12. Verfahren nach Anspruch 11, **dadurch gekennzeichnet, dass** die Form (3) eine in erster Linie konvexe Formoberfläche (4) aufweist.

## Claims

1. Part (11) made of a composite formed from a thermosetting resin, which includes lightning protection means, **characterized in that** said lightning protection means comprise, on an upper surface (12) of said part (11) liable to be exposed to lightning strikes, a continuous layer of a metal foil (1) having perforations (2), each of which has a surface area less than or equal to 20 mm², and with a degree of perforation between 0.005 % and 20 %.

2. Part according to claim 1, **characterized in that** the degree of perforation is between 0.005 % and 5 %.

3. Part according to claim 1 or 2, **characterized in that** the perforations (2) are positioned according to a regular pattern, especially a grid.

4. Part according to any one of claims 1 to 3, **characterized in that** said metal foil (1) is an aluminum foil.

5. Part according to any one of claims 1 to 4, **characterized in that** the perforations (2) are produced with a spacing of between 0.5 and 5 cm.

6. Part according to any one of claims 1 to 5, **characterized in that** the perforations (2) are all circular in shape.

7. Part according to any one of claims 1 to 6, **characterized in that** the metal foil (1) has a thickness of between 5 and 50 µm.

8. Part according to any one of claims 1 to 7, **characterized in that** the metal foil (1) has, on one face or on two opposite faces, over at least part of its surface, a support layer, especially comprised of mineral fibers, woven or arranged in felt.

9. Metal foil (1) for manufacturing a part (11) made of a composite formed from a thermosetting resin according to any one of claims 1 to 8.

10. Foil according to claim 9, **characterized in that** it is covered by a thin layer of said thermosetting resin in a non-polymerized state on one face, or on two opposite faces.

11. Method of manufacturing a part (11) made of a composite according to any one of claims 1 to 8, **characterized in that**:
- layers of fibers impregnated with thermosetting resin are deposited over a mold (3) so as to form a composite laminate (7),
- a metal foil (1) or several juxtaposed metal foils, preferably covered by a layer of said thermosetting resin on one face, and preferably on two faces, are applied over said laminate (7) so as to form a continuous layer over one face of said laminate,
- bleeder and breather cloths (9) and a flexible bladder (10) are successively positioned on said continuous layer,
- a partial vacuum is then realized between the bladder (10) and the mold (3),
- and the mold (3) is subjected to temperature and pressure cycles so as to achieve the polymerization of the resin and the compaction of the layers of fibers.

12. Method according to claim 11, **characterized in that** the mold (3) has a mainly convex molding surface (4).
